# EUROPÄISCHE PATENTANMELDUNG

(11) **EP 1 452 792 A1**
(43) Veröffentlichungstag der Anmeldung: **01.09.2004**
(21) Anmeldenummer: 04003743.4
(22) Anmeldetag: 19.02.2004
(51) Int. Cl.: F16L 59/065, E04B 1/80, C04B 14/06

(54) **Wärmedämmung für Unterwasser-Bauteile für die Öl- und Gasförderung**

(30) Priorität: 27.02.2003 DE 10308581
(71) Anmelder: Wacker-Chemie GmbH, 81737 München (DE)
(72) Erfinder: Eyhorn, Thomas, 87452 Altusried (DE)
(74) Vertreter: Potten, Holger

(57) **Zusammenfassung**

Die Erfindung betrifft eine Wärmedämmung für Unterwasser-Bauteile, wobei ein wärmedämmender Formkörper das Bauteil umgibt und eine elastische wasserfeste Hülle den wärmedämmenden Formkörper umgibt dadurch gekennzeichnet, dass es sich bei dem wärmedämmenden Formkörper um ein nano-, meso- oder mikroporöses Material auf der Basis von gefällter oder pyrogener Kieselsäure, Lichtbogenkieselsäure oder / und Aerogel, besonders bevorzugt um mikroporöses Dämmmaterial auf der Basis von pyrogener Kieselsäure, handelt.

## Beschreibung

Gegenstand der Erfindung ist eine Wärmedämmung für Unterwasser-Bauteile für die Öl- und Gasförderung.

Die Öl- und Gasförderung vom Meeresboden erfordert eine Vielzahl von Bauteilen wie Rohrleitungen, Ventil- und andere Steuersysteme, die unterseeisch montiert werden. Das geförderte Rohöl enthält Bestandteile, die bei Abkühlung zu einem Verstopfen der Ventile und Leitungen führen. Daher ist eine thermische Isolation von Unterwasser-Bauteilen für die Öl- und Gasförderung am Meeresboden (insbesondere komplexe Strukturen wie "manifolds", X-mas trees", "templates", etc.) mit geeigneten Materialien und Strukturen notwendig. Ansonsten kann die Temperatur in den Leitungen bei regelmäßig auftretenden Unterbrechungen der Förderung stark absinken. Wenn aber die Temperatur eine bestimmte (für das jeweilige Feld spezifische) Temperatur unterschreitet, bilden sich Hydrat- und Wachs-Ablagerungen in den Leitungen, deren Beseitigung aufwendig und teuer ist. Thermisch gedämmte Leitungen hingegen kühlen langsamer ab.

Als Wärmedämmung werden bevorzugt Polymere (Polypropylen, Polyethylen, Polyurethan, Epoxy, Elastomere) eingesetzt, deren geringe Wärmeleitfähigkeit (ca. 0,2 W/mK) sich vorteilhaft mit geringem Gewicht und guten mechanischen Eigenschaften paart. Die Wärmedämm-Eigenschaften von Polymeren werden oft durch Zusatz von Hohlkugeln (Glas, Kunststoff, Keramik) verbessert, was gleichzeitig auch das Gewicht senkt bzw. sogar Auftrieb erzeugt. Meistens werden Hohlkugeln verschiedener Größe eingemischt, um den Füllgrad zu erhöhen und die Wärmeleitfähigkeit zu senken (z. B. US 6058979: Subsea pipeline insulation oder US 6284809: Thermally insulating syntactic foam composition).

Des weiteren werden sogenannte pipe-in-pipe (PIP) Systeme angewendet, bei denen die Wärmedämmung zwischen zwei konzentrischen strukturellen Stahlrohren eingebracht wird. In solchen Systemen können offenporige Wärmedämmstoffe (z. B. offenzellige Polymerschäume, Fasermaterialien oder mikroporöse Wärmeisolationen) untergebracht werden; solche Materialien gewährleisten bessere thermische Isolierung (d.h. geringere Wärmeleitung) als die Polymere, so dass geringere radiale Auftragsdicken erforderlich sind. Die Stahl-Ummantelung schützt die Wärmedämmung vor Wassereintritt und hydrostatischem Druck. Gelegentlich werden solche PIP Systeme auch mit Vakuum isoliert, was allerbeste thermische Isolation bewirkt. Aus GB 2269876 ist ferner ein Verfahren zur Wärmeisolierung bekannt, bei der eine Pipeline inmitten von keramischen Mikrohohlkugeln in einer elastischen Hülle gelagert wird. Als elastische Materialien werden Polyethylen, PVC, Polyolefine oder glasfaserverstärkte Harze und bevorzugt Stahl genannt. Um die wärmeisolierende Wirkung nicht zu verlieren müssen die keramischen Mikrohohlkugeln eine Bruchfestigkeit haben, die höher als der umgebende Wasserdruck ist, wenn keine Stahlhülle verwendet wird. Diese Isolierung ist damit nicht für hohe Wasserdrücke geeignet, da es nur bedingt keramische Mikrohohlkugeln mit entsprechender Druckfestigkeit gibt.

Die Polymer-Dämmungen sind durchweg begrenzt in ihrer thermischen Isolationsfähigkeit und leiden zusätzlich unter Qualitätsschwankungen infolge der manuellen Applikation. Gute Qualität heißt immer zusätzlichen Fertigungsaufwand, d.h. erhöhte Kosten und längere Fertigungszeit, insbesondere bei komplexen Bauteilen.

Die thermisch höherwertigen Dämmungen (mikroporöse Dämmstoffe, Latentwärmespeicher) brauchen bislang immer einen schützenden Stahl-Außenmantel, was sich nur für einfache runde Geometrien (Rohre) zu vertretbaren Kosten realisieren lässt. Ohne den Stahlmantel konnte bisher das Eindringen von Wasser in die Wärmedämmung nicht verhindert werden. Auch wird angenommen, dass der hohe hydrostatische Druck die Dämmung zerstört oder zumindest schädigt.

Aufgabe der Erfindung ist es, eine effiziente Wärmedämmung für Unterwasser Bauteile zur Verfügung zu stellen, die zudem preisgünstiger ist als eine bekannte Wärmedämmung für diesen Zweck.

Diese Aufgabe wird gelöst durch einen wärmedämmenden Formkörper, der das Bauteil umgibt, sowie einer elastischen wasserfesten Hülle, die den wärmedämmenden Formkörper umgibt.

Bei dem wärmedämmenden Formkörper handelt es sich vorzugsweise um ein nano-, meso- oder mikroporöses Material auf der Basis von gefällter oder pyrogener Kieselsäure, Lichtbogenkieselsäuren oder / und Aerogelen, besonders bevorzugt um mikroporöses Dämmmaterial auf der Basis von pyrogener Kieselsäure.

Das Dämmmaterial befindet sich vorzugsweise in einer Folie, besonders bevorzugt einer Kunststofffolie. Als Folien sind einschichtige Folien, wie z.B. Polyethylen (PE)-Folien oder Polyamid (PA)-Folien, oder mehrschichtige Folien (Verbundfolien), wie z.B. PE/PA-Folien oder PE/PA/Polypropylen-Folien geeignet. Die Folie kann durch Metallisierung oder durch eine Schicht Aluminium eine verbesserte Diffusionsdichtigkeit bekommen, um das Eindringen von Wasser und Gasen wie z.B. Wasserdampf auch über lange Zeiträume und bei hohen Drücken (große Wassertiefe) zu minimieren. Dadurch kann das Wärmedämmverhalten über Jahre konstant gehalten werden.

Das Innere dieser Folie wird vorzugsweise evakuiert, was die so erhaltene Dämmplatte stabilisiert und die Handhabung erleichtert. Das Evakuieren kann derart durchgeführt werden, dass im Inneren der Folie nur ein geringes Vakuum vorzugsweise von 100 bis 950 mbar herrscht, es kann jedoch ebenso derart durchgeführt werden, dass im Inneren der Folie ein hohes Vakuum, vorzugsweise kleiner 100 mbar, besonders bevorzugt kleiner 10 mbar herrscht. Auch hochevakuierte Syteme wie z.B. Vakuumisolationspaneele sind somit als wärmedämmender Formkörper geeignet. Diese können gegebenenfalls mit Gettern ausgerüstet sein, um einen Druckanstieg im Innern der Paneele über Jahre zu minimieren. Die so eingeschweißte Isolation kann 3 bis 50 mm dick sein, bevorzugt 5 - 20 mm. Vorzugsweise weist sie in regelmäßigen Abständen Einschnitte auf, wodurch die Wärmedämmplatte flexibel wird und um verschiedene Krümmungen gewickelt werden kann. Entsprechende Wärmedämmplatten sind bekannt und z.B. bereits in US 6110310 (entspricht EP-B-0937939) beschrieben. Auf den Inhalt dieses Patents wird bezüglich möglicher Ausgestaltungen der Wärmedämmschicht explizit verwiesen. (US 6110310 is hereby incorporated by reference).

Es ist ebenfalls möglich, die einzelnen Dämmplatten als eine Lage oder mehrlagig um das Bauteil anzuordnen, wobei die Schichten so angeordnet werden können, dass ein Versatz in den Stoßstellen stattfindet, und diese Anordnung dann mit einer elastischen wasserfesten Hülle zu versehen.

Die elastische wasserfeste Hülle hat vorzugsweise eine Wandstärke 1 - 5 mm, um die bei Montage und in Betrieb auftretenden mechanischen Belastungen aufnehmen zu können, ohne daß die innere Folie beschädigt wird.

Die elastische wasserfeste Hülle weist vorzugsweise eine Verformbarkeit auf, die unter hydrostatischem Druck eine Kompression der inneren Paneele ohne Risse in der Hülle zuläßt. Als elastische wasserfeste Hülle bevorzugt geeignet sind Materialien mit einer Reißdehnung von 100 bis 1000 %. Geeignete Materialien sind beispielsweise als Hüllmaterialien für das Kaltisostatpressen bekannt. Bei der elastischen wasserfesten Hülle handelt es sich vorzugsweise um ein Elastomer oder einen elastischen Thermoplasten wie Polyurethan, Vulkollan®, PVC, Gummi und andere entsprechend elastische Materialien.

Die elastische wasserfeste Hülle besitzt vorzugsweise einen wasserdichten Verschluß, der ein Eindringen von Wasser in die Elastomerhülle verhindert. Dieser Verschluß sollte auch bei mechanischer Verformung nicht aufreißen, um damit die Sicherheit gegen Wassereindringen zu erhöhen. Der Verschluß kann beispielsweise geschweißt, geklemmt oder geklebt sein.

Die Wärmedämmformkörper (Isolationspaneele) werden vorgefertigt und um die zu dämmenden Bauteile gelegt; eine flexible Bauform, vorzugsweise mit Einschnitten, erlaubt eine paßgenaue Anlage an die Bauteilkontur. Bevorzugt werden mindestens zwei Lagen der Wärmedämmformkörper aufgebracht, um Wärmebrücken an Stößen und Einschnitten zu überdecken und den Gesamtwirkungsgrad zu verbessern. Anschließend wird die wasserfeste Hülle aufgezogen und abgedichtet.

Nach Befestigung der erfindungsgemäßen Wärmedämmung auf dem Bauteil (z. B. durch Spanngurte oder Klebung) wird das Bauteil unter Wasser installiert, wobei der auftretende Wasserdruck die Isolation kompaktiert. Hierbei verringert sich die Wandstärke, aber die Stabilität erhöht sich gleichzeitig, so daß in der Betriebswassertiefe die endgültige Dicke und Form erreicht werden. Die Isolation ist jetzt so steif, daß sie weitgehend selbständig um das Bauteil geformt bleibt, und die ursprüngliche Befestigung nur als zusätzliche Sicherung dient. Auch die einzelnen Lagen der wärmedämmenden Formkörper verbinden sich zu einem stabilen Verbund, sodaß sich ein dem Bauteil angepaßtes Wämedämmelement ergibt.

Der große Vorteil der erfindungsgemäßen Isolation ist neben der hervorragenden Wärmedämmung die einfache Herstellung der ummantelten Bauteile. Es zeigte sich nämlich bei entsprechenden Versuchen völlig überraschend, dass selbst bei sehr großen Drücken bei einer mikroporösen Dämmung der Bauteile auf eine druckfeste Umhüllung verzichtet werden kann, ohne dass das mikroporöse Dämmmaterial zerstört wird. Die Dämmwirkung wird auf Grund der erhöhten Dichte zwar gemindert, ist aber weiterhin sehr gut. Ein Druck von 300 bar (entspricht ca. 3000 m Wassertiefe) verdichtet die erfindungsgemäße mikroporöse Dämmung so, daß die Dichte ca. 1000 kg/m³ beträgt, und die Wärmeleitfähigkeit von ca. 0,02 auf ca. 0,06 W/mK ansteigt. Im Vergleich dazu zeigen die besten Polymerisolationen einen Wärmeleitfähigkeitswert von über 0,13 W/mK. Die Isolationseigenschaften der Polymerisolationen sind also weiterhin deutlich schlechter.

Bei der erfindungsgemäßen Wärmedämmung dient die äußere elastische Hülle der Fixierung des Materials auf dem Bauteil und der Verhinderung des Wasserzutritts, da die Wärmedämmung unmittelbaren Kontakt zum Wasser hat.

Die vorliegende Erfindung macht damit erstmals eine hocheffiziente Wärmedämmung von komplexen Unterwasser-Bauteilen ohne einen schützenden Stahlmantel bei Drücken oberhalb 10 bar, vorzugsweise 50 bar, insbesondere bevorzugt 100 bar möglich.

Die Erfindung betrifft ferner ein Verfahren zur Wärmedämmung von Unterwasser-Bauteilen bei der Öl- und Gasförderung, dadurch gekennzeichnet, dass ein Unterwasser-Bauteil mit einem wärmedämmenden Material umhüllt wird und dieses Material mit einer elastischen, wasserfesten Hülle versehen wird.

Vorzugsweise ist das wärmedämmende Material ein mikroporöses Material. Vorzugsweise wird das mikroporöse Material zuerst in eine Folie bei Unterdruck eingeschweißt, die das Handling des Materials erleichtert und auch bereits vor der Applikation auf das Bauteil vor Feuchtigkeit schützt.

## Patentansprüche

1. Wärmedämmung für Unterwasser-Bauteile bei der ein wärmedämmender Formkörper das Bauteil umgibt und eine elastische wasserfeste Hülle den wärmedämmenden Formkörper umgibt, **dadurch gekennzeichnet, dass** es sich bei dem wärmedämmenden Formkörper um ein nano-, meso- oder mikroporöses Material auf der Basis von gefällter oder pyrogener Kieselsäure, Lichtbogenkieselsäure oder / und Aerogel, besonders bevorzugt um mikroporöses Dämmmaterial auf der Basis von pyrogener Kieselsäure, handelt.

2. Wärmedämmung nach Anspruch 1, **dadurch gekennzeichnet, dass** sich das mikroporöse Dämmmaterial in einer Folie befindet.

3. Wärmedämmung nach Anspruch 2, **dadurch gekennzeichnet, dass** die Folie eine einschichtige Folie, wie z.B. eine Polyethylen (PE)-Folie oder eine Polyamid (PA)-Folie, oder eine mehrschichtige Folie (Verbundfolie), wie z.B. eine PE/PA-Folie oder eine PE/PA/Polypropylen-Folie ist.

4. Wärmedämmung nach Anspruch 2 oder 3, **dadurch gekennzeichnet, dass** die Folie metallisiert ist oder eine Metallschicht enthält und dadurch eine verbesserte Diffusionsdichtigkeit besitzt.

5. Wärmedämmung nach einem der Ansprüche 2 bis 4, **dadurch gekennzeichnet, dass** das Innere der Folie evakuiert ist.

6. Wärmedämmung nach einem der Ansprüche 1 bis 5, **dadurch gekennzeichnet, dass** es sich bei der elastischen wasserfesten Hülle um ein Material mit einer Reißdehnung von 100 bis 1000 % handelt.

7. Wärmedämmung nach einem der Ansprüche 1 bis 6, **dadurch gekennzeichnet, dass** es sich bei der elastischen wasserfesten Hülle um ein Elastomer oder einen elastischen Thermoplasten handelt.

8. Verwendung einer Wärmedämmung nach einem der Ansprüche 1 bis 7 zur Wärmedämmung von komplexen Unterwasser-Bauteilen ohne einen schützenden Stahlmantel bei Drücken oberhalb 10 bar, vorzugsweise 50 bar, insbesondere bevorzugt 100 bar.

9. Verfahren zur Wärmeisolierung eines Unterwasser-Bauteils bei der Öl- und Gasförderung, **dadurch gekennzeichnet, dass** das Unterwasser-Bauteil mit einem mikroporösen Material umhüllt wird und dieses Material mit einer elastischen, wasserfesten Hülle versehen wird.
